(19) Europäisches Patentamt
European Patent Office
Office européen des brevets

(11) Veröffentlichungsnummer: **0 596 454 A1**

# (12) EUROPÄISCHE PATENTANMELDUNG

(21) Anmeldenummer: **93117738.0**

(51) Int. Cl.$^5$: **C08G 73/02**, C08G 81/00

(22) Anmeldetag: **02.11.93**

(30) Priorität: **06.11.92 DE 4237493**

(43) Veröffentlichungstag der Anmeldung:
**11.05.94 Patentblatt 94/19**

(84) Benannte Vertragsstaaten:
**DE ES FR GB IT**

(71) Anmelder: **Fresenius AG**
**Gluckensteinweg 5**
**D-61350 Bad Homburg(DE)**

(72) Erfinder: **Konstantin, Peter, Dr.**
**Möwenweg 37**
**D-66625 Neunkirchen(DE)**
Erfinder: **Rinck, Michael, Dr.**
**Rittershofstrasse 60**
**D-66386 St. Ingbert-Hassel(DE)**

(74) Vertreter: **Dr. Fuchs, Dr. Luderschmidt Dr. Mehler, Dipl.-Ing Weiss Patentanwälte**
**Postfach 46 60**
**D-65036 Wiesbaden (DE)**

## (54) Verfahren zur Immobilisierung von Linearpolymeren auf einem chemisch reaktionsträgen Trägermaterial.

(57) Es wird ein Verfahren zur Immobilisierung eines Linearpolymeren, insbesondere Polyionenen, das in einem hydrophilen Lösungsmittel löslich ist, auf einem chemisch reaktionsträgen Trägermaterial und eine nach diesem Verfahren herstellbare beschichtete Matrix mit antimikrobieller Wirksamkeit zur Verfügung gestellt, welche für insbesondere intrakorporal zu applizierende medizinische Vorrichtungen und ferner, in Form von mikroporösen Membranen, als Filter für die Wasseraufbereitung, oder, in Form von Kügelchen, als Oberflächendesinfektionsmittel verwendbar ist.

Das Verfahren zeichnet sich dadurch aus, daß man die beiden endständigen reaktiven Gruppen des Linearpolymeren mit einem Überschuß einer alpha,omega-bifunktionellen Verbindung umsetzt, das erhaltene Reaktionsprodukt, gelöst in einem hydrophilen Lösungsmittel, mindestens einmal auf das Trägermaterial aufbringt und sodann mit einem Vernetzungsmittel, gelöst in einem hydrophoben Lösungsmittel, das gegenüber dem Vernetzungsmittel und Trägermaterial inert ist, vernetzt.

EP 0 596 454 A1

Die Erfindung betrifft ein Verfahren zur Immobilisierung von in einem hydrophilen Lösungsmittel löslichen Linearpolymeren auf einem chemisch reaktionsträgen Trägermaterial, eine beschichtete Matrix mit antimikrobieller Wirksamkeit auf Basis eines reaktionsträgen Tragermaterials und einer Beschichtung aus Polyionenen sowie deren Verwendung.

Es ist bekannt, Linearpolymere, wie zum Beispiel Polyionene, an ein polymeres Trägermaterial mittels kovalenter Bindungen, gegebenenfalls über einen Spacer, anzukoppeln und dadurch auf dem Träger zu immobilisieren.

So wurden beispielsweise aus der US-PS 4.781.063 Reaktionsprodukte von speziellen Polyionenen mit modifizierten Polysacchariden als Trägermaterial in Form einer selbsttragenden Fasermatrix bekannt, die als Trennmedien mit antibaktieller Wirksamkeit für die Ionenaustausch-, Affinitäts- und Umkehrphasenchromatographie sowie als Träger für Bioreaktoren vorgeschlagen wurden.

Diese Produkte werden durch Umsetzung von Polyionenen, erforderlichenfalls nach Einführung zusätzlicher reaktiver Gruppen in diese, gegebenenfalls über Spacer, mit den reaktiven Hydroxylgruppen des modifizierten Polysaccharids als Trägermaterial hergestellt.

Dank der starken kovalenten Bindung zwischen dem Trägermaterial und den Polyionenen als Beschichtungsmaterial zeigen diese Reaktionsprodukte eine beträchtliche Widerstandsfähigkeit gegenüber einem Auslaugen bzw. Auswaschen bei ihrem Gebrauch in flüssigen Medien, die in der Lage sind, nicht oder unzureichend immobilisierte Polyionene aufzulösen, wie insbesondere hydrophile, wie z.B.wässrige Medien. Andererseits ist infolge der starken chemischen Bindung der Polyionene an das Trägermaterial, gegebenenfalls über Spacer, eine mehr oder weniger starke Veränderung ihrer chemischen und/oder antimikrobiellen Eigenschaften nicht auszuschließen, was zum Beispiel dann unerwünscht ist, wenn die Veränderung zu einer Beeinträchtigung der antimikrobiellen Wirksamkeit führt.

Voraussetzung für ein derartiges Herstellungsverfahren ist, daß auch das Trägermaterial chemisch reaktiv ist, so daß dieses Verfahren zur Immobilisierung von Linearpolymeren auf chemisch reaktionsträgen Trägermaterialien, wie zum Beispiel solchen aus Metallen und Polymeren wie Polysulfonen, Poly(tetrafluoretylen), Silikonen und dergleichen, in der Regel ungeeignet ist und nur dann zum Ziel führen kann, wenn die Einführung von Spacern in das polymere Trägermaterial - was eine weitere aufwendige Verfahrensstufe bedingt, - gelingt.

Aus der US-PS 3.899.534 sind mit wasserunlöslichen, vernetzten Polyionenen beschichtete bzw. imprägnierte Papiere und Textilien bekannt, die eine antibakterielle Wirkung aufweisen. Sie werden durch Polymerisation eines ditertiären Amins mit einer di-(halogenmethylierten) aromatischen Verbindung unter gleichzeitiger Vernetzung auf dem Substrat erhalten, wenn die Maßgabe eingehalten wird, daß einer der beiden monomeren Reaktionspartner zumindest trifunktionell ist. Die hierbei in situ entstehenden Polykondensate sind jedoch stark modifizierte Polyionene mit einem hohen Gehalt an alternierend einkondensierten Resten des aromatischen Comonomeren, das als Vernetzungsmittel dient. Infolgedessen weist das Schichtmaterial gegenüber unmodifizierten Polyionenen beträchtliche Veränderungen der Molekülstruktur und somit der chemischen und/oder antimikrobiellen Eigenschaften auf.

Aus der DE 38 01 690 A1 ist eine Polymermembran bekannt, die einen Polyionenkomplex enthält, der durch Assoziierung auf der Oberfläche der Membran und/oder in der Membran gebildet wird. Die Wechselwirkung ist ionischer Natur, der resultierende Polyionenkomplex ist ein Aggregat, in dem die Polymermoleküle miteinander durch viele Ionenbindungen zu einer dreidimensionalen Struktur assoziiert sind. Verfahrensmäßig wird zur Herstellung der Membran nach der DE 38 01 690 A1 eine Membran aus einem kationischen oder anionischen Polymer durch Vernetzen insolubilisiert und dann in eine Lösung aus einem anionischen bzw. kationischen Polymer getaucht.

Des weiteren schlägt die DE 38 01 690 A1 auch ein Verfahren zur Herstellung einer Verbundmembran vor, bei dem auf einer porösen Polymermembran eine Hautschicht aus anionischem Polymer durch Vernetzung insolubilisiert wird und anschließend in eine Lösung aus einem kationischen Polymer getaucht wird, um dadurch das anionische Polymer der Hautschicht in einen Polyionenkomplex umzuwandeln.

Aufgrund der erforderlichen ionischen Wechselwirkung ist das Verfahren gemäß der DE 38 01 690 immer auf entgegengesetzt geladene Polymerpaare beschränkt.

Demgemäß ist die vorliegender Erfindung zugrundeliegende Hauptaufgabe die Bereitstellung eines möglichst einfach und wirtschaftlich durchführbaren Verfahrens zur Immobilisierung von in hydrophilen Lösungsmitteln löslichen Linearpolymeren, vorzugsweise Polyionenen, auf einem chemisch reaktionsträgen Trägermaterial, zum Beispiel aus Metall oder polymerem Kunststoff, vorzugsweise Polysulfon, das zu Produkten führt, die eine möglichst feste Bindung des Linearpolymeren an das inerte Trägermaterial und somit bei Gebrauch in flüssigen, insbesondere hydrophilen, wie z.B. wässrigen, Medien eine gute Widerstandsfähigkeit gegenüber einem Auswaschen des Linearpolymeren durch das Medium aufweisen, ohne daß die ursprünglichen chemischen und/oder antimikrobiellen Eigenschaften des Linearpolymeren wesentlich beeinträchtigt sind. Hierbei soll die zu erzielende feste Bindung nicht durch kovalente Bindungen erreicht werden, und das zu immobilisierende Linearpolymere soll als solches, und nicht in Form der zugrundeliegenden Monomeren, in das Verfahren eingesetzt werden, um die zuvor erwähnten Nachteile von vorneherein auszuschließen.

Eine weitere Aufgabe, die der Erfindung zugrundeliegt, ist die Bereitstellung einer nach dem zuvor charakterisierten Verfahren herstellbaren Matrix aus chemisch reaktionsträgem, biologisch verträglichem Material und einem biokompatiblen Überzug mit lokaler antimikrobieller Wirkung, insbesondere aus Polyionenen, wobei bei Berührung mit flüssigen, insbesondere wässrigen Medien, wie zum Beispiel Körperflüssigkeiten, oder Wasser, diese Wirkung möglichst lange anhalten, und ein Auswaschen des Überzugs durch die flüssigen Medien vermieden werden soll. Die beschichtete Matrix soll insbesondere in Form von zum Beispiel intrakorporal zu applizierenden Kathetern, Vaskularprothesen, Schrittmachern, intrauterinen und intraperitonealen Schläuchen oder von Vasalschläuchen und dergleichen für medizinische Vorrichtungen, in Form beschichteter Membranfilter für die Wasseraufbereitung, oder, ausgebildet als beschichtete Kügelchen, als Oberflächendesinfektionsmittel geeignet sein.

Der antimikrobielle Überzug der Matrix soll weder Resistenzerscheinungen noch durch sein Auswaschen bedingte systemische Wirkungen hervorrufen, wenn die Matrix in Form von medizinischen Vorrichtungen intrakorporal appliziert wird.

Ein Bedürfnis für derart beschichtete Matrices aus Materialien, wie zum Beispiel Metallen oder Polysulfon, bestand nicht nur wegen deren chemischen Resistenz und Bioverträglichkeit, sondern auch aufgrund ihren spezifischen physikalischen Eigenschaften, die sich zum Beispiel bei der Formgebung vorteilhaft auswirken können.

Bekannntlich besteht insbesondere bei der Langzeitanwendung intrakorporal applizierter Vorrichtungen, zum Beispiel Verweilkathetern, Vaskularprothesen, Schrittmachern, intrauterinen und intraperitonealen Vorrichtungen, wie zum Beispiel Schläuchen zur Peritonealdialyse oder vasalen Zugängen, Fixatoren und dergleichen, das Problem, daß sich Infektionen verursachende Bakterien an der Oberfläche der Vorrichtungen in Kolonien ansiedeln. Diese Kolonien stellen eine kontinuierliche Infektionsquelle dar. Dieses Phänomen wurde sowohl bei intrakorporal applizierten medizinischen Vorrichtungen beobachtet, die aus Metall, wie zum Beispiel rostfreiem Stahl oder Tantal, als auch bei solchen, die aus in der Medizintechnik üblicherweise verwendeten polymeren Kunststoffen bestanden, wie zum Beispiel aus Natur-, oder Synthesekautschuk, Polyethylen, Polypropylen, Polyamid, Poly(tetrafluorethylen), Polysulfon, PVC, PVP Silikon und Polyurethan.

Bislang versuchte man diesen Problemen dadurch zu begegnen, daß man die biomedizinischen Vorrichtungen aus Kunststoff mit, unter anderem, Antibiotika oder Desinfektionsmittel (chemisch nichtreaktiv) beschichtete bzw. diese in die zugrundeliegenden Kunststoffe einmischte.

So beschreibt die US-PS 4.542.169 biomedizinische Vorrichtungen zum Beispiel zur intrauterinen oder intraperitonealen Anwendung, aus Natur-, Synthese- und Silikonkautschuk, Polypropylen, Polyamid oder Polyurethan, in die bestimmte Isothiozalone als antimikrobieller Wirkstoff eingemischt sind, bzw. solche, die mit letzterem (physikalisch) beschichtet sind.

Derartige Vorrichtungen weisen jedoch den Nachteil auf, daß der Wirkstoff auf dem der Vorrichtung zugrundeliegenden polymeren Kunststoff unzureichend immobilisiert ist, so daß die Vorrichtungen im Lauf einer Langzeitanwendung, wie es bei Kathetern, vasalen Zugängen und Fixatoren u. dgl. zumeist der Fall ist, infolge "Ausschwemmen" bzw. Migration des Wirkstoffs ihre Wirksamkeit allmählich verlieren. Ferner kann durch die Migration des Wirkstoffs in andere Körperbereiche als dem lokalen Einsatzort eine unerwünschte systemische Wirkung auftreten. Bei Antibiotika als Wirkstoff tritt zudem das Problem von Resistenzerscheinungen auf.

Gegenstand der Erfindung ist nunmehr ein Verfahren zur Immobilisierung von in einem hydrophilen Lösungsmittel löslichen Polyionen auf einem chemisch reaktionsträgen Trägermaterial, das dadurch gekennzeichnet ist, daß man die beiden endständigen reaktiven Gruppen des Linearpolymeren mit einem Überschuß einer alpha, omega- bifunktionellen Verbindung umsetzt, das erhaltene Reaktionsprodukt, gelöst in einem hydrophilen Lösungsmittel, mindestens einmal auf das Trägermaterial aufbringt und sodann mit einem Vernetzungsmittel, gelöst in einem hydrophoben Lösungsmittel, das gegenüber dem Vernetzungsmittel und dem Trägermaterial inert ist, vernetzt, wobei als Polyionen ein solches der nachfolgenden allgemeinen Formel I in das Verfahren eingesetzt wird,

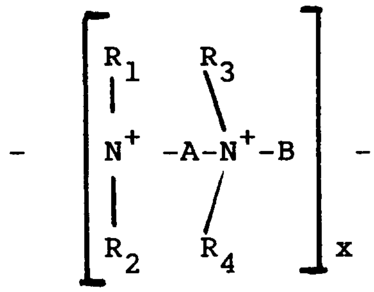

(I)

worin x den Polymerisationsgrad, $R_1$, $R_2$, $R_3$ und $R_4$, die gleich oder verschieden sein können, jeweils gerad- oder verzweigtkettige Alkylgruppen mit 1 bis 4 Kohlenstoffatomen, und A sowie B, die gleich oder verschieden sein können, jeweils eine der Gruppen $-CH_2-$,$-C_2H_4-$ oder

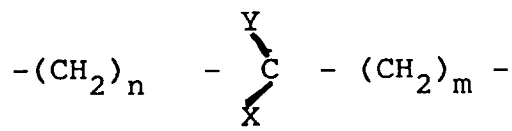

mit der Maßgabe bedeuten, daß die Summe der Kohlenstoffatome in den beiden Gruppen A und B mindestens 6 ist, wobei n und m jeweils eine ganze Zahl von 1 bis 16, und X sowie Y jeweils -H, $-CH_3$, -OH, -CHO, $-NH_2$, NHZ, $-N(Z)_2$, wobei Z eine Alkylgruppe mit 1 bis 4 Kohlenstoffatomen ist und beide Substituenten Z gleich oder verschieden sein können, oder die Gruppe

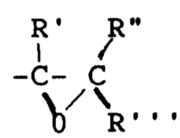

bedeuten, worin R', R", und R''', die gleich oder verschieden sein können, jeweils ein Wasserstoffatom oder eine Alkylgruppe mit 1 bis 6 Kohlenstoffatomen bedeuten, oder X und Y zusammen ein Sauerstoffatom darstellen, wobei das Molekulargewicht des Polyionens im Bereich von 10.000 bis 100.000, insbesondere 20.000 bis 80.000, Dalton liegt. Als reaktionsträges Trägermaterial setzt man vorzugsweise ein gegebenenfalls modifiziertes Polysulfon ein.

Bei der Durchführung des Verfahrens mit einem Polyionen als Linearpolymerem verwendet man als bifunktionelle Verbindung vorzugsweise eine insbesondere langkettige alpha, omega-Diaminoverbindung, und als Vernetzungsmittel vorzugsweise ein reaktionsfähiges Derivat einer insbesondere langkettigen alpha, omega-Dicarbonsäure, wie zum Beispiel das Dihalogenid oder den Diester, während man als hydrophiles Lösungsmittel für das Reaktionsprodukt vorzugsweise Methanol verwendet. Hierbei werden unter dem Begriff" langkettig" solche Verbindungen verstanden, die in ihrer geraden Kette etwa 8 oder mehr Kohlenstoffatome aufweisen.

Das erfindungsgemäße Verfahren beruht auf der Verwendung der unverändert eingesetzten linearpolymerisierten Vorprodukte als Beschichtungsmaterial für die Reaktionsträgerstoffe, wie zum Beispiel von normalen Polyionenen als solchen und nicht in Form von zugrundeliegenden Monomeren. Diese werden zunächst in der ersten Verfahrensstufe durch Umsetzung mit einem Überschuß einer bifunktionellen Verbindung, im Falle von Polyionenen vorzugsweise mit einem langkettigen alpha, omega-Diamin, wie zum Beispiel 1,8 - Diaminooktan, mit chemisch gleichartigen Kettenenden versehen. Aus dieser Reaktion resultieren Linearpolymere, die in hydrophilen Solventien noch gut löslich sind und damit in einfacher Weise auf die unterschiedlichsten Oberflächen der Trägermaterialien aufgebracht werden können. Aus Gründen der guten Benetzung und geringen Oberflächenspannung eignet sich besonders Methanol als Solvens. Die Lösung des in der ersten Stufe erhaltenen Reaktionsprodukts in einem hydrophilen Lösungsmittel kann durch Tauchen oder andere übliche Techniken auf das Trägermaterial aufgebracht werden; zur

Erzielung genügend dicker Schichten kann dies mehrfach hintereinander erfolgen, wobei jeweils ein Trockenvorgang eingeschaltet wird.

Die derart beschichteten Trägermaterialien werden sodann in der zweiten Verfahrensstufe durch Vernetzung auf der Oberfläche des Trägermaterials immobilisiert. Hierzu wird das beschichtete Material mit einer Lösung einer linearen insbesondere langkettigen alpha, omega-bifunktionellen Verbindung als Vernetzungsmittel behandelt, deren reaktionsfähige Endgruppen auf die Endgruppen der in der ersten Verfahrensstufe verwendeten alpha, omega-bifunktionellen Verbindung chemisch abgestimmt sind. Im Falle der in der ersten Verfahrensstufe durch terminale Diaminogruppen abgeschlossenen Polyionene eignen sich als Vernetzer besondere reaktionsfähige Derivate einer insbesondere langkettigen alpha, omega-Dicarbonsäure, insbesondere alpha, omega-Dicarbonsäurehalogenide oder -ester, wie zum Beispiel 1,8-Dodekandicarbonsäuredichlorid. In dieser zweiten Verfahrensstufe wird ein hydrophobes Lösungsmittel eingesetzt, insbesondere ein Kohlenwasserstoff, der aufgrund seiner Hydrophobizität weder die zuvor aufgebrachte Schicht bzw. Schichten ablöst, noch mit dem reaktiven Vernetzer in Reaktion tritt und das verwendete Trägermaterial nicht angreift. Abschließend werden nicht oder nur ungenügend vernetzte Polyionenprodukte durch Auswaschen mit Wasser entfernt.

Die Verfahrensprodukte erwiesen sich unerwarteterweise als extrem wenig wasserlöslich, obwohl sie im Verhältnis zu den geladenen hydrophilen Ammoniumgruppen nur wenig hydrophobe Alkanfragmente vom Vernetzer aufweisen. Sie weisen infolgedessen einen Immobilitätsgrad auf, der bislang nur durch die Ausbildung einer kovalenten Bindung zwischen Beschichtungsmaterial und Träger erreicht werden konnte. Da die eigentlichen Ketten der Linearpolymeren, wie zum Beispiel die Polyionenketten, nur an ihren Enden chemisch modifiziert und vernetzt werden, bleiben die Eigenschaften der ursprünglichen Linearpolymeren weitgehend erhalten.

Bei den Verfahrensprodukten ist die Oberfläche des reaktionsträgen Trägermaterials mit einem verhältnismäßig flexiblen Netz aus den Linearpolymeren wie Polyionenen abgedeckt, dessen Maschenweite sowohl durch den Polymerisationsgrad der jeweiligen Linearpolymeren als auch durch die Länge der benutzten Vernetzer bestimmt wird.

Gewünschtenfalls können die Eigenschaften des Beschichtungsmaterials durch chemische Modifikation, auch des Vernetzers, variiert werden; zum Beispiel können hierzu wiederum Linearpolymere mit geeigneten Endgruppen, zum Beispiel Carbonsäurehalogenide, verwendet werden. Gewtüschtenfalls kann eine mehrfache Beschichtung in der ersten Verfahrensstufe, ausgehend von unterschiedlichen Polyionenen, durchgeführt werden.

Weiterer Gegenstand der Erfindung ist eine Matrix mit antimikrobieller Wirksamkeit auf Basis eines reaktionsträgen Materials und einer Beschichtung aus Polyionenen, die dadurch gekennzeichnet ist, daß die Polyionene ohne Ausbildung kovalenter Bindungen so fest an das reaktionsträge Material gebunden sind, daß sie ihre Wasserlöslichkeit verloren haben. Vorzugsweise liegen die Polyionene in im wesentlichen unveränderter Molekülstruktur in der Schicht vor.

Vorzugsweise ist das reaktionsträge Material ein polymerer Kunststoff, insbesondere ein Polysulfon.

Derartige Matrices sind nach dem zuvor beschriebenen erfindungsgemäßen Verfahren erhältlich, wenn man in dieses als linearpolymeres Ausgangsmaterial ein Polyionen, vorzugsweise ein solches der zuvor definierten allgemeinen Formel I einsetzt, als bifunktionelle Verbindung in der ersten Verfahrensstufe eine insbesondere langkettige alpha, omega-Diamino-Verbindung, wie zum Beispiel 1,8-Diaminooktan, und als Vernetzungsmittel in der zweiten Verfahrensstufe ein reaktionsfähiges Derivat einer insbesondere langkettigen alpha, omega-Dicarbonsäure, wie zum Beispiel das Dichlorid oder den Diester, einsetzt.

Weiterer Gegenstand der Erfindung ist die Verwendung der erfindungsgemäßen Matrices für insbesondere intrakorporal zu applizierende medizinische Vorrichtungen, in Form von mikroporösen Membranen als Filter für die Wasseraufbereitung oder in Form von Kügelchen als Oberflächendesinfektionsmittel. Beispiele für intracorporal zu applizierende und zum Beispiel bei der Peritonealdialyse oder Drainage im Dauereinsatz zur Anwendung gelangende medizinische Vorrichtungen sind Katheter oder Schläuche. Weitere Beispiele für medizinische Vorrichtungen sind Vaskularprothesen, Schrittmacher und vasale Zugänge, zum Beispiel in Form von Schläuchen.

Dank der äußerst starken Immobilisierung der an sich hydrophilen Polyionene auf der zugrunde liegenden Matrix, die aus einem herkömmlichen, bekannterweise in der Medizintechnik verwendeten reaktionsträgen Material besteht, weisen aus der erfindungsgemäßen Matrix bestehende medizinische Vorrichtungen die weiter oben erwähnten Nachteile bekannter derartiger Vorrichtungen nicht auf. Vielmehr eignen sie sich hervorragend für einen Langzeiteinsatz, da die antimikrobielle Wirksamkeit der Polyionene dank ihrer starken Immobilisierung über einen langen Zeitraum lokal am Einsatzort unter Beibehaltung der Biokompatibilität erhalten bleibt, wobei sie eine Biofilmbildung auf der Vorrichtung verhindern, und keine systemische Wirkung auftritt.

Analoges gilt für mikroporöse Membranen aus der erfindungsgemäßen Matrix, die als Filter für die Wasseraufbereitung verwendet werden können, und dergleichen.

Zu vorgenannten Zwecken wird vorzugsweise eine erfindungsgemäße beschichtete Matrix benutzt, der ein modifiziertes oder unmodifiziertes Polysulfon zugrundeliegt.

Nachfolgende, mit Bakterien durchgeführte Adhäsionstests zeigen, daß auf den erfindungsgemäßen Matrices keine Besiedlung mit Keimen, das heißt, keine Biofilmbildung auftritt. Die erfindungsgemäßen Matrices sind auch biokompatibel; eine mutagene und/oder zytotoxische Wirkung kann aufgrund der durchgeführten Tests ausgeschlossen werden.

Mit dem erstmals im Jahr 1968 geprägten Begriff "Polyionene" (vgl. Polymer Letters 6, Seite 159 bis 171 (1968)) der inzwischen von der Fachwelt, einschließlich den Chemical Abstracts, und (vgl. US-PS-3.784.649) allgemein akzeptiert wurde, werden polyanionische- und polykationische Polymerisate mit polyquarternären Ammoniumgruppen, die beispielsweise durch gleiche oder verschiedene aromatische oder aliphatische Reste voneinander getrennt sind, bezeichnet. Die Zahl vor "Ionen" in der Nomenklatur bezeichnet die Kettenlänge dieser Reste zwischen den quaternären $NH_4^+$ -Gruppen.

Die Polyionene der allgemeinen Formel I sind auf herkömmliche Weise durch Umsetzung der entsprechenden Dihalogenverbindungen mit sekundären oder tertiären Aminen herstellbar (vgl. z.B. US-PSen 4.038.318, 3.898.188, 3.910.819, 3.927.242 und 4.013.507). Verschiedene kationische Polyionene sind im Handel erhältlich.

Die Polyionene der allgemeine Formel I werden vorzugsweise in Form ihrer in Wasser sehr gut löslichen Bromide oder Chloride eingesetzt.

Beispiel 1

Das erfindungsgemäße Verfahren wird nachfolgend anhand der Immobilisierung von Polyionenen als in einem hydrophilen Lösungsmittel löslichen Linearpolymeren näher beschrieben. Die Immobilisierung anderer in hydrophilen Lösungsmitteln löslicher Linearpolymere erfolgt auf analoge Weise.

10 g des Polyionens (in Form seines Chlorid- oder Bromidsalzes) werden mit 5 g 1,8-Diaminooktan in 100 ml Chloroform 2 Stunden bis zum Sieden erwärmt. Nach Abkühlen der Reaktionslösung wird mit Aceton geschüttelt, und das ausgefallene Material wird durch Absaugen abgetrennt.

Von dem erhaltenen Reaktionsprodukt wird 1 g in 100 ml Methanol gelöst, die Lösung wird durch Eintauchen eines aus dem zu beschichtenden reaktionsträgen Trägermaterial bestehenden Formkörpers, wie zum Beispiel eines Schlauches, einer Membran oder von Kügelchen, als Überzug aufgebracht. Nach Abtropfen wird, zum Beispiel im Trockenschrank bei 80 °C, getrocknet. Gewünschtenfalls kann dieser Beschichtungsvorgang mehrmals wiederholt werden.

Der so vorbehandelte Formkörper wird mit einer Lösung von 1 g 1,8-Dodecan-dicarbonsäuredichlorid in 100 ml eines Kohlenwasserstoffs, wie zum Beispiel Cyclohexan, unter Zusatz von etwa 2 ml eines Protonenakzeptors, wie zum Beispiel Ethyldiisopropylamin, behandelt, indem man ihn z.B. in die Lösung eintaucht, wobei etwa 1 Stunde erwärmt wird. Anschließend wird der so behandelte Formkörper wiederholt mit Wasser gewaschen.

Beispiel 2

Es wurde zunächst die antibakterielle und antivirale Wirksamkeit verschiedener polyionener Beschichtungsmaterialien gegenüber verschiedenen Bakterien bzw. Legionella pneumophila ermittelt. Die Ergebnisse sind in den folgenden Tabellen 1 bis 7 zusammengefaßt.

Die getesteten Polyionene (Substanzen 1, 3, 5, 6, 6A, 6B und 6C) wurden auf herkömmliche Weise durch Umsetzung der entsprechenden omega-Dihalogenide mit den entsprechenden tert. Aminen hergestellt.

1. Antimikrobielle Wirksamkeit von als Beschichtungsmaterial verwendeten Polyionenen

1.1. Bestimmung der minimalen Hemmkonzentration (MHK) und minimalen bakteriziden Konzentration (MBK) an klinisch isolierten Bakterienteststämmen.

Testmethode: Die zu prüfenden Substanzen werden, erforderlichenfalls unter kurzfristigem Erwärmen auf 80-90 °C, in Aqua dest. oder $D_2O$ gelöst. Es werden Stammlösungen in einer Konzentration von 2560 µg/ml hergestellt, die für den Test zunächst 1:10 und dann serienweise durch Halbieren der jeweiligen Konzentration weiter verdünnt werden.

Die Bestimmung der minimalen Hemmkonzentration (MHK), wurde nach der Mikrotitermethode durchgeführt. Die Teststämme wurden 18 Stunden bei 35 °C in Müller Hinton Medium inkubiert, danach wurden Suspensionen mit einem Trübungsstandard entsprechend Mc Farland Nr. 0,5 (ca. 5 x

$10^7$ KBE/ml) hergestellt. Diese Suspension wurde im Verhältnis 1:50 weiterverdünnt und dann als Inokulum eingesetzt. In jedes Cup der Mikrotiterplatten wurden 0,05 ml Keimsuspension pipettiert. Die Platten wurden 18 Stunden bei 35 °C bebrütet. Die MHK wurde definiert als diejenige Konzentration, bei der kein makroskopisch sichtbares Wachstum gefunden wurde.

Zur Bestimmung der minimalen bakteriziden Konzentration (MBK), bei der überhaupt keine vermehrungsfähigen Keime mehr nachgewiesen werden können, wurde der Inhalt der Cups, die kein Wachstum zeigten, auf Blutagarplatten ausplattiert.

Folgende Polyionene wurden getestet:

| Substanz Nr. | Kurzbezeichnung | Kationenstruktur gemäß allg. Formel I | MG (Dalton) x $10^3$ |
|---|---|---|---|
| 1 | 2,10-Ionen-Iodid | $R_1$, $R_2$, $R_3$ und<br>$R_4$: jeweils $-CH_3$;<br>$A = -C_2H_4$;<br>$B = -(CH_2)_n-\underset{Y}{\overset{X}{C}}-(CH_2)_m-$<br>wobei n = 1, m = 8 und X und Y jeweils H | etwa 50-60 |
| 3 | 6,10-Ionen Iodid | $R_1$, $R_2$, $R_3$ und<br>$R_4$: jeweils $-CH_3$;<br>$A = -(CH_2)_n-\underset{Y}{\overset{X}{C}}-(CH_2)_m-$<br>wobei n = 1, m = 4 und X und Y jeweils H;<br>$B = -(CH_2)-\underset{Y}{\overset{X}{C}}-(CH_2)_m-$<br>wobei n = 1, m = 8 und X und Y jeweils H; | etwa 50-60 |
| 5 | 2,10-Ionen-Bromid | (vgl. Subst. Nr.1) | etwa 50-60 |
| 6 | 6,10-Ionen-Bromid | (vgl. Subst. Nr.2) | etwa 50-60 |
| 6 A | dito | | 70 bis 80 |
| 6 B | dito | | 40 bis 50 |
| 6 C | dito | | 20 bis 30 |

Die Ergebnisse sind in den Tabellen 1-7 dargestellt. Darin bedeuten das Zeichen + makroskopisch sichtbares, das Zeichen - nicht sichtbares Wachstum (MHK-Bestimmung); die entsprechenden Zeichen in runden Klammern zeigen an, ob in den Cups ohne sichtbares Wachstum überlebende Keime nachgewiesen wurden (MBK-Bestimmung).

Bei den Tests gemäß den Tabellen 1-4 waren in den meisten Fällen die MHK und MBK etwa gleich. Nur in einem Fall, bei Substanz Nr. 1 mit Candida albicans als Testkeim, lag die MBK um mindestens 5 Verdünnungsstufen höher als die MHK.

Bei den Tests gemaß Tabellen 5 bis 7, die in beträchtlichem Zeitabstand und demzufolge unter Verwendung unterschiedlicher Teststämme durchgeführt wurden bzw. werden mußten, waren die MBK-Werte teilweise deutlich höher als die MHK-Werte, was die Testkeime Candida albicans und Strept. faecalis betrifft. Infolge der anderen Teststämme sind die Ergebnisse gemäß Tabellen 1 bis 4 nur bedingt mit denjenigen gemäß Tabellen 5 bis 7 vergleichbar. Die Versuchsergebnisse belegen eine insgesamt hohe antimikrobielle Wirksamkeit der getesteten Polyionene, mit graduellen Unterschieden je nach ihrer Zusammensetzung und Art der Teststämme. Die mit drei Fraktionen unterschiedlicher Molekulargewichte einer identischen Verbindung (Nr. 6) erhaltenen Versuchsergebnisse gemäß Tabellen 5 bis 7 zeigen, daß jedenfalls im untersuchten Molekulargewichtsbereich (etwa 20.000 bis etwa 80.000 Dalton) die antibakterielle Wirksamkeit von der Kettenlänge bzw. dem Molekulargewicht des Polyionens nicht signifikant abhängig ist.

Tab. 1 : Substanz 1

| Testkeime \ µg/ml | 128 | 64 | 32 | 16 | 8 | 4 | 2 | 1 | 0,5 |
|---|---|---|---|---|---|---|---|---|---|
| Prot.mirabilis | (-)<br>- | (-)<br>- | (+)<br>- | + | + | + | + | + | + |
| Strept.faecalis | (-)<br>- | (-)<br>- | (-)<br>- | (-)<br>- | - | - | - | + | + |
| Ent.cloacae | (-)<br>- | (-)<br>- | (-)<br>- | (-)<br>- | - | + | + | + | + |
| E.coli | (-)<br>- | (-)<br>- | (-)<br>- | (-)<br>- | - | + | + | + | + |
| Candida albicans | (+)<br>- | (+)<br>- | (+)<br>- | (+)<br>- | (+)<br>- | + | + | + | + |
| Staph.aureus | (-)<br>- | (-)<br>- | (-)<br>- | (-)<br>- | - | - | - | + | + |
| Staph.epidermidis | (-)<br>- | (-)<br>- | (-)<br>- | (-)<br>- | - | - | - | - | + |
| Ps.aeruginosa | (-)<br>- | (-)<br>- | (-)<br>- | (-)<br>- | - | - | + | + | + |

Tab. 2 : Substanz 3

| Testkeime \ µg/ml | 128 | 64 | 32 | 16 | 8 | 4 | 2 | 1 | 0,5 |
|---|---|---|---|---|---|---|---|---|---|
| Prot.mirabilis | (-)<br>- | (-)<br>- | (-)<br>- | (-)<br>- | + | + | + | + | + |
| Strept.faecalis | - | - | (-)<br>- | (-)<br>- | (-)<br>- | (-)<br>- | - | + | + |
| Ent.cloacae | - | - | (-)<br>- | (-)<br>- | (-)<br>- | (-)<br>- | - | + | + |
| E.coli | - | - | (-)<br>- | (-)<br>- | (-)<br>- | (-)<br>- | - | + | + |
| Candida albicans | (-)<br>- | (-)<br>- | (-)<br>- | (-)<br>- | (-)<br>- | (-)<br>- | + | + | + |
| Staph.aureus | - | - | (-)<br>- | (-)<br>- | (-)<br>- | (-)<br>- | - | + | + |
| Staph.epidermidis | - | - | (-)<br>- | (-)<br>- | (-)<br>- | (-)<br>- | (-)<br>- | (-)<br>- | + |
| Ps.aeruginosa | - | (-)<br>- | (-)<br>- | (-)<br>- | (-)<br>- | - | + | + | + |

Tab. 3 : Substanz 5

| Testkeime \ µg/ml | 128 | 64 | 32 | 16 | 8 | 4 | 2 | 1 | 0,5 | 0,25 |
|---|---|---|---|---|---|---|---|---|---|---|
| Prot.mirabilis | (-) − | (-) − | + | + | + | + | + | + | + | + |
| Strept.faecalis | (-) − | (-) − | (-) − | (-) − | (-) − | (-) − | (-) − | + | + | + |
| Ent.cloacae | − | − | − | (-) − | (-) − | (-) − | (-) − | + | + | + |
| E. coli | − | − | (-) − | (-) − | (-) − | (-) − | + | + | + | + |
| Candida albicans | (-) − | (-) − | (-) − | (-) − | (-) − | (+) − | + | + | + | + |
| Staph.aureus | − | − | − | − | (-) − | (-) − | (-) − | (-) − | + | + |
| Staph.epidermidis | − | − | − | − | − | (-) − | (-) − | (-) − | (+) − | + |
| Ps.aeruginosa | − | − | (-) − | (-) − | (-) − | (+) − | + | + | + | + |

Tab. 4 : Substanz 6

| Testkeime \ µg/ml | 128 | 64 | 32 | 16 | 8 | 4 | 2 | 1 | 0,5 | 0,25 |
|---|---|---|---|---|---|---|---|---|---|---|
| Prot.mirabilis | (-) − | (-) − | (-) − | (-) − | + | + | + | + | + | + |
| Strept.faecalis | − | − | − | − | (-) − | (-) − | (-) − | (-) − | + | + |
| Ent.cloacae | − | − | − | (-) − | (-) − | (-) − | (-) − | + | + | + |
| E.coli | − | − | − | (-) − | (-) − | (-) − | (-) − | + | + | + |
| Candida albicans | (-) − | (-) − | (-) − | (-) − | (-) − | (-) − | + | + | + | + |
| Staph.aureus | − | − | − | − | (-) − | (-) − | (-) − | (-) − | + | + |
| Staph.epidermidis | − | − | − | − | − | (-) − | (-) − | (-) − | (-) − | + |
| Ps.aeruginosa | − | − | − | (-) − | (-) − | (-) − | (+) − | + | + | + |

Tab. 5 : Substanz 6A:

| Testkeime \ µg/ml | 128 | 64 | 32 | 16 | 8 | 4 | 2 |
|---|---|---|---|---|---|---|---|
| Ent. cloacae | (-) - | (-) - | (-) - | (-) - | + | + | + |
| Candida albicans | (+) - | (+) - | (+) - | (+) - | (+) - | + | + |
| Strept.faecalis | (+) - | (+) - | (+) - | (+) - | (+) - | (+) - | + |
| Staph.epidermidis | (-) - | (-) - | (-) - | (-) - | (-) - | + | + |
| Staph. aureus | (-) - | (-) - | (-) - | (-) - | + | + | + |
| Prot. mirabilis | (-) - | (-) - | (-) - | (-) - | + | + | + |
| E. coli | (-) - | (-) - | (-) - | (-) - | (-) - | (-) - | + |
| Ps. aeruginosa | (-) - | (-) - | (-) - | (-) - | (-) - | + | + |

Tab. 6 : Substanz 6B:

| Testkeime \ µg/ml | 128 | 64 | 32 | 16 | 8 | 4 | 2 |
|---|---|---|---|---|---|---|---|
| Ent. cloacae | (-)<br>- | (-)<br>- | (-)<br>- | (-)<br>- | + | + | + |
| Candida albicans | (+)<br>- | (+)<br>- | (+)<br>- | + | + | + | + |
| Strept.faecalis | (-)<br>- | (-)<br>- | (-)<br>- | (+)<br>- | (+)<br>- | (+)<br>- | + |
| Staph.epidermidis | (-)<br>- | (-)<br>- | (-)<br>- | (-)<br>- | + | + | + |
| Staph. aureus | (-)<br>- | (-)<br>- | (-)<br>- | + | + | + | + |
| Prot.mirabilis | (-)<br>- | (-)<br>- | (-)<br>- | (-)<br>- | (-)<br>- | + | + |
| E. coli | (-)<br>- | (-)<br>- | (-)<br>- | (-)<br>- | (-)<br>- | + | + |
| Ps. aeruginosa | (-)<br>- | (-)<br>- | (-)<br>- | (-)<br>- | + | + | + |

Tab. 7 : Substanz 6C:

| Testkeime \ µg/ml | 128 | 64 | 32 | 16 | 8 | 4 | 2 |
|---|---|---|---|---|---|---|---|
| Ent. cloacae | (-)<br>- | (-)<br>- | (-)<br>- | (-)<br>- | + | + | + |
| Candida albicans | (+)<br>- | (+)<br>- | (+)<br>- | (+)<br>+ | + | + | + |
| Strept.faecalis | (-)<br>- | (-)<br>- | (-)<br>- | (-)<br>- | - | - | + |
| Staph.epidermidis | (-)<br>- | (-)<br>- | (-)<br>- | (-)<br>- | (-)<br>- | + | + |
| Staph. aureus | (-)<br>- | (-)<br>- | (+)<br>- | (+)<br>- | + | + | + |
| Prot.mirabilis | (-)<br>- | (-)<br>- | (-)<br>- | (-)<br>- | + | + | + |
| E. coli | (-)<br>- | (-)<br>- | (-)<br>- | (-)<br>- | (-)<br>- | + | + |
| Ps. aeruginosa | (-)<br>- | (-)<br>- | (-)<br>- | (-)<br>- | + | + | + |

1.2. Prüfung auf antivirale Wirksamkeit

Die zu prüfenden Substanzen wurdem im Agar-Diffusionstest auf Wirksamkeit gegen zwei Species von Legionella pneumophila getestet. Als Nährboden wurde Legionella - CYE - Agar (Oxoid) verwendet. Es wurden jeweils 2 Konzentrationen (2,5 mg/ml und 25 mg/ml) der Testsubstanzen geprüft, wobei je 50 µl auf die Testblättchen gegeben wurden, entsprechend 0,125 µg bzw. 1,25 µg pro Testblättchen.

Die Substanz Nr. 5 verursachte bei der Konzentration von 1,25 µg einen Hemmhof von 17 mm Durchmesser, bei der niedrigen Konzentration von 0,125 µg war keine Wirkung zu erkennen.

Die Substanz Nr. 6 verursachte bei der Konzentration von 1,25 µg einen Hemmhof von 20 mm und bei der Konzentration von 0,125 µg einen Hemmhof von 7-8 mm Durchmesser.

Die Hemmhofdurchmesser waren bei beiden Teststämmen gleich.

2. Toxikologische Untersuchungen

Aufgrund der bekanntermaßen starken Wechselwirkung der Polyionene mit Nukleinsäuren wurden Untersuchungen zum mutagenen Potential der als Beschichtungsmaterial verwendeten Polyionene anhand der Substanz Nr. 6 (6,10-Ionen-Bromid) durchgeführt. Die Testmethode war die von Ames (vgl. Proc. Natl. Acad. Sci. (USA) Bd. 70, S. 2281-2285 (1973); B.J. Kilbey u.a. (Herausgeber) "Handbook of Mutagenicity test Procedures", Elsevier, Amsterdam, S. 1-17 (1977); Mutation Res. Bd. 113, S. 173-215 (1983); und a.a.O., Bd. 189, S. 83-91 (1987)). Dieser Test basiert auf dem Prinzip der Rückmutation verschiedener ausgesuchter Stämme von Salmonella typhimurium von einer Histidinabhängigkeit (Auxotrophie) zu einer Histidinunabhängigkeit (Prototrophie) mit erhöhter Häufigkeit in Gegenwart eines Mutagens. Eine Testsubstanz, die eine reproduzierbare und statistisch signifikante, auf die Dosis bezogene Erhöhung der Anzahl rückmutierter Bakterien hervorruft, wird als Mutagen bezeichnet. Eine Testsubstanz, die weder eine statistisch signifikante, auf die Dosis bezogene Erhöhung der Anzahl rückmutierender Bakterien noch eine statistisch signifikante und reproduzierbare positive Reaktion bei einem beliebigen Testpunkt hervorruft, wird in diesem Testsystem als nicht mutagen bezeichnet.

Es wurden zwei unabhängige Mutagenitätstests, jeweils in Gegenwart und in Anwesenheit eines externen metabolischen Aktivierungssystems (Rattenlebergemisch S9) durchgeführt. Das metabolische Aktivierungssystem bestand aus einem S9 Leberhomogenat, hergestellt von mit Aroclor 1254 induzierten Ratten (Organon Teknika, Eppelheim; lot 32957), das mit 5 mM Glucose-6-phosphat, 4 mM $\beta$-Nicotinamid-adenin-dinucleotidphosphat (NADP), 100 mM Phosphatpuffer vom pH-Wert 7,6, 8 mM $MgCl_2$ und 33 mM KCl ergänzt war.

Bei keiner der getesten Konzentrationen (0,01 bis 1,0 mg/Platte) wurde eine statistisch signifikante, auf die Konzentration bezogene Erhöhung einer Koloniebildung über die spontanen Rückmutationsraten der Salmonella-Stämme beobachtet. Hieraus ergibt sich, daß die getestete Substanz in Salmonella typhimurium unter den vorgenannten Bedingungen nicht mutagen ist.

Ferner wurde die Substanz Nr. 6 hinsichtlich einer möglichen zytotoxischen Wirkung einem Wachstumsinhibierungstest unterzogen. In diesem Testsystem wird ein vermindertes Zellwachstum in Gegenwart toxischer Substanzen ermittelt, indem man den Proteingehalt von behandelten Zellkulturen mit dem Proteingehalt von unbehandelten Vergleichskulturen nach einer Inkubation von 72 Stunden ermittelt. Der Proteingehalt ist ein indirektes Maß für das Zellwachstum bezüglich der Wachstumshemmung, die durch toxische Substanzen bewirkt wird. Eine Wachstumshemmung von mehr als 30 % im Vergleich zu den unbehandelten Kulturen (Negativkontrollen) wird als ein klarer zytotoxischer Effekt angesehen.

Die zu testende Substanz wurde aufgelöst und serienmäßig mit dem Zellkulturmedium (DMEM-FCS) auf Endkonzentrationen von 2,6; 4,0; 5,9; 8,8, 13,3 und 20,0 µg/ml verdünnt. L929 Zellkulturen wurden 72 Stunden in Gegenwart der verschiedenen Konzentrationen der Testsubstanz inkubiert. Als Testorganismus wurden L929 Zellen ATCC Nr. CCLI, NCTC Klon 929 (Bindegewebe der Maus, Klon vom Stamm L) verwendet. DMEM (Dulbecco's modified Eagle medium, Artikel Nr. 041-01965 M) wurde mit 10 % fötalem Kälberserum FCS), 100 µg/ml Penicillin und 100 µg/ml Streptomycin ergänzt. Als negative Kontrolle wurde DMEM-FCS ohne Testsubstanz, als positive Kontrolle Dimethylsulfoxid (7,5 % V/V DMSO) verwendet. 100 µl der Testlösungen bzw. 100 µl der Kontrollen wurden, jeweils dreifach, in die Löcher von einer Gewebeplatte mit 96 Löchern gegeben. Sodann wurden 50 ml einer frisch zubereiteten Zellsuspension mit einem Gehalt von $1x10^5$ Zellen pro 1 ml in alle Löcher eingeimpft, mit der Ausnahme derjenigen Löcher, welche zur background-Bestimmung dienten. Die Gewebeplatten wurden 72 Stunden in feuchter Luft (5 % $CO_2$/95 % Luft) bei 97 °C inkubiert. Der Proteingehalt eines jeden Lochs wurde unter Anwendung der colorimetrischen BCA-Proteintestmethode (vgl. Analytical Biochemistry, Pd. 150, S 76-85 (1985)) ermittelt.

Es wurde nachgewiesen, daß die Substanz 6 bei einer Konzentration von mehr als 4 µg/ ml während einer permanenten Kontaktzeit von 72 Stunden zytotoxische Wirkungen aufwies.

3. Untersuchungen zum Keimadhäsionsverhalten von mit Polyionenen beschichteten Polysulfonplatten.

Auf Platten einer Größe von 1 x 1 aus Polysulfon wurde nach dem Verfahren des Beispiels 1 die Substanz Nr. 6 (6,10-Ionen-Bromid) aufgebracht. Es wurden 3 Plättchen des beschichteten Polysulfons sowie 3 unbeschichtete Plättchen als Kontrolle zur Ermittlung der antiadhäsiven Eigenschaften nachfolgendem Versuch unterworfen.

Als Bakterienstamm diente Staphylococcus epidermitis KH6 (24-Stunden-Kultur in CASO-Bouillon bei 37 °C). Nach zweimaligem Waschen in PBS (20 mM Kaliumphosphatpuffer in isotonischer Kochsalzlösung vom pH-Wert 7,8) wurde die Ausgangssuspension in PBS hergestellt. Sie wies eine Extinktion bei 545 nm von 0,0589 auf, was einer Keimzahl von 1,6 x $10^7$ entspricht. Die zu prüfenden Plättchen wurden in die Ausgangssuspension eingelegt; die Aufbewahrung während der Inkubationszeit von 90 min bei Raumtemperatur erfolgte auf einem Rollenmischer. Nach Beendigung der Inkubationszeit wurde das Material dreimal je 5 sec in jeweils etwa 20 ml PBS gespült und einmal mit Ampuwa nachgespült. Die Fixierung wurde während 30 min bei 80 °C vorgenommen. Zur fluoreszenzmikroskopischen Auswertung wurden die Plättchen während 5 min mit Acridinorange angefärbt. Bei der Auswertung wurde ein 100er Objektiv mit Öl verwendet. Die Ergebnisse sind in nachfolgender Tabelle 8 enthalten. Sie belegen einen ausgesprochenenen antiadhäsiven Charakter der Beschichtung aus Polyionenen, wodurch eine Biofilmbildung in der Entstehung verhindert wird.

Tabelle 8

Ergebnisse der Auszählung der beschichteten Plättchen und der Kontrolle; ausgewertete Fläche:

| Probe | Mittelwert aus 20 Gesichtsfeldern | $\bar{x}$ | geringster - höchster Wert |
|---|---|---|---|
| beschichtet | 11,2 | | 0 - 30 |
| beschichtet | 5,20 | 7,72 | 0 - 18 |
| beschichtet | 6,75 | | 0 - 21 |
| unbesch. | 30,1 | | 1 -139 |
| unbesch. | 25,6 | 33,80 | 1 - 81 |
| unbesch. | 45,7 | | 1 -247 |

**Patentansprüche**

1. Verfahren zur Immobilisierung von in einem hydrophilen Lösungsmittel löslichen Polyionen auf einem chemisch reaktionsträgen Trägermaterial, dadurch gekennzeichnet, daß man die beiden endständigen reaktiven Gruppen des Polyionen mit einem Überschuß einer α,w-bifunktionellen Verbindung umsetzt, das erhaltene Reaktionsprodukt, gelöst in einem hydrophilen Lösungsmittel, mindestens einmal auf das Trägermaterial aufbringt und sodann mit einem Vernetzungsmittel, gelöst in einem hydrophoben Lösungsmittel, das gegenüber dem Vernetzungsmittel und Trägermaterial inert ist, vernetzt, wobei das Polyionen ein solches der allgemeinen Formel I

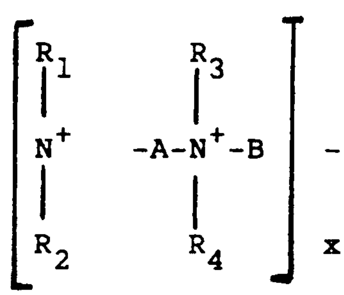 (I)

ist, worin x den Polymerisationsgrad, $R_1$, $R_2$, $R_3$ und $R_4$, die gleich oder verschieden sein können, jeweils gerad- oder verzweigtkettige Alkylgruppen mit 1 bis 4 Kohlenstoffatomen, und A sowie B, die gleich oder verschieden sein können, jeweils eine der Gruppen $-CH_2-$,$-C_2H_4-$ oder

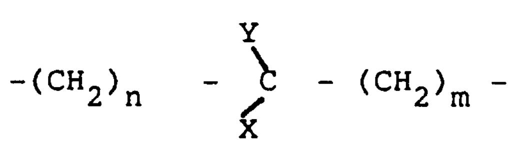

mit der Maßgabe bedeuten, daß die Summe der Kohlenstoffatome in den beiden Gruppen A und B mindestens 6 ist, wobei n und m jeweils eine ganze Zahl von 1 bis 16, und X sowie Y jeweils -H, $-CH_3$, -OH, -CHO, $-NH_2$, NHZ, $-N(Z)_2$, wobei Z eine Alkylgruppe mit 1 bis 4 Kohlenstoffatomen ist und beide Substituenten Z gleich oder verschieden sein können, oder die Gruppe

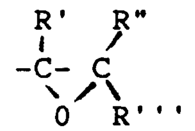

bedeuten, worin R', R'', und R''', die gleich oder verschieden sein können, jeweils ein Wasserstoffatom oder eine Alkylgruppe mit 1 bis 6 Kohlenstoffatomen bedeuten, oder X und Y zusammen ein Sauerstoffatom darstellen, wobei das Molekulargewicht des Polyionens im Bereich von 10.000 bis 100.000, insbesondere 20.000 bis 80.000, Dalton liegt.

2. Verfahren nach Anspruch 1, dadurch gekennzeichnet, daß man eine langkettige α,w-bifunktionelle Verbindung verwendet.

3. Verfahren gemäß Anspruch 1, dadurch gekennzeichnet, daß man eine insbesondere langkettige α,w-Diaminoverbindung als bifunktionelle Verbindung verwendet.

4. Verfahren gemäß Anspruch 3, dadurch gekennzeichnet, daß man ein reaktionsfähiges Derivat einer insbesondere langkettigen α,w-Dicarbonsäure als Vernetzungsmittel verwendet.

5. Verfahren nach einem der Ansprüche 1, 2 oder 3, dadurch gekennzeichnet, daß man als hydrophiles Lösungsmittel für das Reaktionsprodukt Methanol verwendet.

6. Verfahren nach einem der vorhergehenden Ansprüche, dadurch gekennzeichnet, daß das chemisch reaktionsträge Trägermaterial ein Polysulfon ist.

7. Matrix mit antimikrobieller Wirksamkeit auf Basis eines reaktionsträgen Materials und einer Beschichtung aus Polyionenen, dadurch gekennzeichnet, daß die Polyionene ohne Ausbildung kovalenter oder ionischer Bindungen so fest an das reaktionsträge Material gebunden sind, daß sie ihre Löslichkeit in wässrigen Medien verloren haben.

8. Matrix gemäß Anspruch 7, dadurch gekennzeichnet, daß die Polyionene in im wesentlichen unveränderter Molekülstruktur in der Schicht vorliegen.

9. Matrix gemäß Anspruch 7 oder 8, dadurch gekennzeichnet, daß das reaktionsträge Material ein polymerer Kunststoff ist.

10. Matrix gemäß Anspruch 9, dadurch gekennzeichnet, daß der polymere Kunststoff ein Polysulfon ist.

11. Matrix gemäß einem der Ansprüche 8 bis 10, dadurch gekennzeichnet, daß sie nach dem Verfahren gemäß einem der Ansprüche 1 bis 5 hergestellt worden ist.

12. Verwendung der beschichteten Matrix gemäß einem der Ansprüche 7 bis 11 für insbesondere intrakorporal zu applizierende medizinische Vorrichtungen, in Form von mikroporösen Membranen als Filter für die Wasseraufbereitung, oder in Form von Kügelchen als Oberflächendesinfektionsmittel.

Europäisches Patentamt

# EUROPÄISCHER RECHERCHENBERICHT

Nummer der Anmeldung
EP 93 11 7738

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A,D | DE-A-38 01 690 (GENERAL DIRECTOR OF THE AGENCY OF INDUSTRIAL SCIENCE AND TECHNOLOGY)<br>* Ansprüche 1-18 *<br>--- | 1-12 | C08G73/02<br>C08G81/00 |
| A,D | US-A-3 899 534 (REMBAUM ET AL.)<br>* Ansprüche 1-6 *<br>----- | 1-12 | |

| | RECHERCHIERTE SACHGEBIETE (Int.Cl.5) |
|---|---|
| | C08G |

Der vorliegende Recherchenbericht wurde für alle Patentansprüche erstellt

| Recherchenort | Abschlußdatum der Recherche | Prüfer |
|---|---|---|
| DEN HAAG | 20. Januar 1994 | Glanddier, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)